Europäisches Patentamt

European Patent Office

Office européen des brevets

(11) Publication number: 0 353 789
A1

## EUROPEAN PATENT APPLICATION

(21) Application number: 89117671.1

(22) Date of filing: 26.02.86

(51) Int. Cl.⁴: C08B 11/193 , B01J 19/06 , //C09D9/00,C10L7/04

Claim for the following Contracting State: AT

(30) Priority: 28.02.85 US 706829
15.08.85 US 765788

(43) Date of publication of application:
07.02.90 Bulletin 90/06

(60) Publication number of the earlier application in accordance with Art.76 EPC: 0 198 582

(84) Designated Contracting States:
AT BE CH DE FR GB IT LI NL SE

(71) Applicant: THE DOW CHEMICAL COMPANY
2030 Dow Center, Abbott Road
Midland MI 48640(US)

(72) Inventor: Hess, Roland H.P.
Appitalstrasse 56
CH-8804 Au(CH)

(74) Representative: Burford, Anthony Frederick et al
W.H. Beck, Greener & Co. 7 Stone Buildings
Lincoln's Inn
London WC2A 3SZ(GB)

(54) Hydroxypropyl methyl cellulose ethers useful as thickening agents for organic liquids.

(57) Hydroxypropyl cellulose ethers which have a methoxyl substitution of from 21 percent to 35 percent and a hydroxypropoxyl substitution of from 18 percent to 35 percent and a sum of the methoxyl and hydroxypropoxyl substitution of from 39 percent to 70 percent and which have a viscosity of at least 1000 mPa.s as a 2 weight percent aqueous solution are useful as thickening agents for organic liquids, optionally mixed with water. The hydroxypropyl methyl cellulose ethers having a methoxyl substitution of from 25 percent to 35 percent a hydroxypropoxyl substitution of from 18 to 30 percent, and a number average molecular weight of at least 50,000 are novel compounds.

EP 0 353 789 A1

# HYDROXYPROPYL METHYL CELLULOSE ETHERS USEFUL AS THICKENING AGENTS FOR ORGANIC LIQUIDS

The invention concerns thickening agents of the hydroxypropyl methyl cellulose type, their use for thickening an organic liquid and new hydroxypropyl methyl cellulose ethers and their preparation.

Hydroxypropyl methyl cellulose ethers (HPMC ethers) have been known for a long time.

Various hydroxypropyl methyl cellulose ethers which are commercially available are those which have a methoxyl substitution of from 27 percent to 30 percent and a hydroxypropoxyl substitution of from 4 percent to 7.5 percent; a methoxyl substitution of from 28 percent to 30 percent and a hydroxypropoxyl substitution of from 7 percent to 12 percent; and a methoxyl substitution of from 19 percent to 24 percent and a hydroxypropoxyl substitution of from 4 percent to 12 percent. All these cellulose ethers can be used as primary suspending agents for the suspension polymerization of vinyl chloride. They are useful for controlling the size of the produced polyvinyl chloride polymer particles.

From European Patent Application 0,080,580 it is known to use a hydroxypropyl methyl cellulose having a methoxyl substitution of 20 percent to 32 percent, a hydroxypropoxyl substitution of 2 percent to 10 percent and a viscosity of 30 to 70 mPa.s as a suspending agent for producing vinyl chloride (co)polymers which polymers are used for decreasing the viscosity of pasty polyvinyl chloride dispersions. Pastes of low viscosity are useful for producing articles which comprise a low amount of plasticizers.

From German Democratic Republic patent specification DD 160354, a process for producing polyvinyl chloride by suspension polymerization of vinyl chloride is known. Combinations of oil-soluble fatty acid esters are used as suspending agents. It is an object of said patent to provide polyvinyl chloride which is able to absorb large amounts of plasticizer. However, it is not clear from the teaching what are the ranges of percentage of the methoxyl and hydroxypropoxyl substitution. The only hydroxypropyl methyl cellulose ether which the patent implies to have a relatively high methoxyl and hydroxypropoxyl substitution is stated to have a methoxyl degree of substitution of 1.95 and a hydroxypropyl molar substitution of 0.42.

Some hydroxypropyl methyl cellulose ethers are commercially available which have a methoxyl substitution of from 16.5 percent to 20 percent and a hydroxypropoxyl substitution of from 23 percent to 32 percent as well as hydroxypropyl methyl cellulose ethers which have a methoxyl substitution of from 19 percent to 28 percent and a hydroxypropoxyl substitution of from 7.5 percent to 11.5 percent. These hydroxypropyl methyl cellulose ethers are known to be useful in emulsion paints.

From U.S. Patent 3,388,082 water soluble HPMC ethers are known which have a methoxyl degree of substitution (DS) of from 0.4 to 1.3, a hydroxypropyl molar substitution (MS) of from 0.2 to 1.4 and a total molar substitution of at least 1.0. The DS/MS values of 0.4/0.2; 0.4/1.4; 1.3/0.2 and 1.3/1.4 can be calculated as percent of methoxyl substitution/hydroxypropoxyl substitution. The corresponding weight percent values are 7 percent/8.3 percent; 4.8 percent/ 43 percent; 21 percent/ 7.8 percent and 15.2 percent/ 40.8 percent, respectively. HPMC ethers which have a methoxyl substitution of from 27 percent to 30 percent and a hydroxypropoxyl substitution of from 4 percent to 7.5 percent, HPMC ethers which have a methoxyl substitution of from 28 percent to 30 percent and a hydroxypropoxyl substitution of from 7 percent to 12 percent, and HPMC ethers which have a methoxyl substitution of from 19 percent to 24 percent and a hydroxypropoxyl substitution of from 4 percent to 12 percent and HPMC ethers which have a methoxyl substitution of from 16.5 percent to 20 percent and a hydroxypropoxyl substitution of from 23 percent to 30 percent are commercially available. These hydroxypropyl methyl cellulose ethers are well known as thickeners. While these cellulose ethers are useful in aqueous systems, unfortunately their use in organic liquids is limited because of their limited solubility in many organic solvents.

However, the thickening of organic liquids, optionally containing water, is often desirable for a variety of reasons such as to impart consistency (e.g. to gel alcohol fuel), to control rheology of and to provide adhesion to a substrate e.g. in paint remover formulations and to impart workability to non-agueous mineral binder/filler systems(e.g. gypsum bandages).

In U.S. Patent 3,617,588 a preparation of cellulose ether films, for example pharmaceutical capsule shells, is disclosed. The cellulose ethers are $C_{2-4}$-hydroxyalkyl $C_{1-2}$-alkyl cellulose ethers which have a DS of 0.6 to 2.0 and a MS of 0.07 to 1.0 and which are characterized by a viscosity of 2 to 20 mPa.s as a 2 weight percent aqueous solution at 20°C. Specifically HPMC ethers are disclosed which have a DS of 1.8 to 2 and a MS of 0.15 to 0.35 which corresponds to a methoxyl substitution of 28 percent to 31 percent and a hydroxypropoxyl substitution of 6 percent to 13 percent. U.S. patent 3,493,407 discloses a process for preparing medical capsules from a solution of HPMC ethers with a methoxyl content of 18 to 32 weight percent and a hydroxypropyl content of 4 to 15 weight percent and which is characterized by a viscosity of 2 to 20 mPa.s as a 2 weight percent aqueous solution at 20°C. Unfortunately, these HPMC ethers are not very useful as thickeners since a very large amount of HPMC is required to obtain a substantial thickening effect.

In view of the deficiencies of the above mentioned HPMC ethers which are presently known as thickening agents it is highly desirable to provide new HPMC thickening agents for organic liquids.

A useful thickening agent of the HPMC ether type for organic solvents is disclosed in U.S. Patent 3,839,319. The HPMC ethers have a DS of 0.2 to 1.0 and a MS of at least 1.5. The hydroxypropoxyl substitution of such HPMC ethers, expressed as weight percent, is more than 40 percent. Unfortunately, production on large scale has shown that the HPMC ethers of such a high hydroxypropoxyl substitution are difficult to be dried by application of heat since these HPMC ethers have thermoplastic properties. Generally heat-drying is however preferred. Accordingly it still remains highly desirable to provide a further class of HPMC ethers which are useful for thickening organic liquids.

The present invention provides new thickening agents of the hydroxypropyl methyl cellulose type for organic liquids. A process for preparing the new HPMC ethers is also disclosed.

From US Patent 4,389,393 it is known to use hydroxypropyl methyl cellulose ethers having a methoxyl substitution of 16-24 weight percent, a hydroxypropoxyl substitution of from 4-32 weight percent and an average molecular weight of at least 50,000 as a carrier base material which is useful in sustained release therapeutic compositions. However, it is not suggested to use these hydroxypropyl methyl cellulose ethers as thickening agents. In US Patent 4,389,393 the above-mentioned commercially available hydroxypropyl methyl cellulose ethers are also discussed briefly. It is mentioned that the commercially available hydroxypropyl methyl cellulose ethers have a methoxyl content of from 16.5 to 30 weight percent and a hydroxypropoxyl content of from 4 to 32 weight percent but this statement is erroneous. The actual levels of substitution in commercial cellulose ethers have been noted above.

Some of the hydroxypropyl methyl cellulose ethers which are useful as thickening agents are novel. Accordingly, one aspect of the present invention are new hydroxypropyl methyl cellulose ethers which have a methoxyl substitution of from 25 percent to 35 percent, a hydroxypropoxyl substitution of from 18 percent to 30 percent and a number average molecular weight of at least 50,000.

Another aspect of the invention concerns the use of a hydroxypropyl methyl cellulose ether for thickening an organic liquid or a mixture thereof with water which ether has a methoxyl substitution of from 21 percent to 35 percent, a hydroxypropoxyl substitution of from 18 percent to 35 percent, a sum of the methoxyl and hydroxypropoxyl substitution of from 39 percent to 70 percent and which has a viscosity of at least 1,000 mPa.s as a 2 weight percent aqueous solution at 20° C.

A further aspect of the invention is a thickened organic liquid or a thickened mixture thereof with water which is characterized in that it contains a thickening amount of a hydroxypropyl methyl cellulose ether which has a methoxyl substitution of from 21 percent to 35 percent, a hydroxypropoxyl substitution of from 18 percent to 35 percent and a sum of the methoxyl and hydroxypropoxyl substitution of from 39 percent to 70 percent which HPMC ether has a viscosity of at least 1000 mPa.s as a 2 weight percent aqueous solution at 20° C.

Surprisingly, a considerable viscosity increase of many organic liquids, optionally mixed with water, can be obtained by the addition of the above mentioned HPMC ethers.

The hydroxypropyl methyl cellulose ethers (HPMC ethers) useful in this invention are prepared by methods known in the art. An example of one such process comprises:

1) reacting cellulose with an aqueous alkali hydroxide, using 1 to 4, preferably 1.5 to 3.5, parts by weight of the aqueous alkali hydroxide per 1 part by weight of cellulose, the alkali hydroxide having a concentration of from 30 to 55 parts by weight, at a temperature of from 10 to 60° C, preferably from 20 to 50° C; followed by

2) reacting the product of step (1) above with methyl chloride and propylene oxide, using 0.3 to 0.9, preferably 0.3 to 0.8, parts by weight of propylene oxide per 1 part by weight of cellulose, using 1 to 3, preferably 2.0 to 2.6, more preferably 2.1 to 2.4, parts by weight of methyl chloride per 1 part by weight of cellulose, at a temperature of from 20 to 100° C, preferably 30 to 90° C.

The reaction of step (1) can be carried out by any conventional method, such as passing rolls of cellulose through a bath or spraying aqueous alkali hydroxide on chopped cellulose.

The reaction of step (2) can have the methyl chloride and propylene oxide added to the reaction either sequentially or simultaneously, e.g. either the whole amount of each reactant at one time (at one shot), or batch-wise (staged addition).

During both steps (1) and (2) it is advantageous to control the air (oxygen) in the reaction vessel in order to control the molecular weight of the product.

Some of the literature available to describe HPMC ether preparation is U.S. Patents 2,949,452; 3,388,082; 2,831,852; 4,410,693; and 4,456,751.

3

The hydroxypropyl methyl cellulose ethers are defined by their methoxyl substitution, hydroxypropoxyl substitution and average molecular weight. The methoxyl and hydroxypropoxyl substitution have been measured and calculated according to ASTM-D 1347-72 and ASTM-D 2363-72, respectively. All the percentages of substitution are by weight of the finally substituted material.

The methoxyl substitution of the hydroxypropyl methyl cellulose ethers to be used as thickening agents, ranges from 21 percent, preferably from 22 percent, most preferably from 25 percent; to 35 percent, preferably to 33 percent, most preferably to 31 percent.

The hydroxypropoxyl substitution of the hydroxypropyl methyl cellulose ethers to be used as thickening agents ranges from 18 percent; preferably from 20 percent: to 35 percent, preferably to 30 percent, most preferably to 27 percent.

The sum of the percentage of the methoxyl and hydroxypropyl substitution is from 39 to 70 percent, preferably from 40 to 65 percent; most preferably from 44 to 58 percent.

The novel HPMC ethers have a methoxyl substitution of from 25 percent to 35 percent, preferably to 33 percent, most preferably to 31 percent and a hydroxypropoxyl substitution of from 18 percent to 30 percent, preferably from 20 percent to 27 percent.

The molecular weight of hydroxypropyl methyl cellulose can be expressed as the viscosity of the solution thereof in a solvent therefor. Unless otherwise stated, the molecular weight of hydroxypropyl methyl cellulose is given herein as the viscosity of a 2 weight percent solution of hydroxypropyl methyl cellulose in water as measured using an UBBELOHDE viscosimeter at 20° C.

The viscosities of 5, 10, 100 and 400 mPa.s correspond to a number average molecular weight ($M_n$) of 10,000, 13,000, 26,000 and 41,000, respectively. The viscosities of aqueous solutions of the HPMC ethers which are used as thickening agents according to the invention are at 20° C at least 1,000 mPa.s, preferably at least 15,000 mPa.s. The viscosities of said solutions are generally up to 200,000 mPa.s, preferably to 150,000 mPa.s, more preferably to 120,000 mPa.s, most preferably to 75,000 mPa.s.

The number average molecular weight ($M_n$) can be determined by osmotic pressure determinations. The number average molecular weight ($M_n$) of the novel HPMC ethers is at least 50,000. Preferably, it is from 55,000, more preferably from 120,000; to 280,000, more preferably to 250,000, most preferably to 220,000.

By adding the above mentioned HPMC ethers to an organic liquid or to mixtures thereof with water, thickened liquids of a wide range of desired viscosities can be obtained. The solubility of the HPMC ethers depends on a variety of factors, e.g. on the level of substitution and on the average molecular weight of the HPMC ethers, on the polarity of the organic liquid and on the type(s) and amount of functional groups of the organic liquid.

By an "organic liquid" an organic solvent or a mixture of organic solvents is meant which are liquid at ambient pressure and ambient or slightly elevated temperature, i.e. up to 50° C.

In general, at least one component of the organic liquid should comprise one or more heteroatoms if the organic liquid is not mixed with water. Preferred heteroatoms are sulfur, nitrogen, oxygen or halogen, e.g., chlorine or bromine. Preferably, the organic liquid comprises one or more polar groups like for example - $NH$, $-NH_2$, $-C(O)-O-$, $-C(O)-N-$, $-COOH$, $-C=O$ or $-OH$

The most preferred organic liquids are aliphatic or cycloaliphatic alcohols, e.g. methyl alcohol (MeOH), ethyl alcohol (EtOH) (preferably technical grade), isopropyl alcohol (e.g. comprising up to about 10 percent water), tertiary butanol, cyclohexanol, dipropylene glycol methyl ether, 2-ethoxyethanol methoxyethanol and 2-butoxyethanol which are commercially available as CELLOSOLVE, METHYLCELLOSOLVE, and BUTYLCELLOSOLVE, respectively; aliphatic or cycloaliphatic ketones, e.g. acetone, methyl ethyl ketone or cyclohexanone; carboxylic acids, e.g. formic acid, acetic acid or lactic acid; carboxylic acid esters, e.g. methyl acetate and butyl acetate; one or more halogen atoms-containing solvents, e.g. methylene chloride, chloroform or ethylene chlorohydrin; aliphatic and cycloaliphatic ethers, e.g. cyclohexanone, tetrahydrofuran or dioxane; amines, e.g. pyrrrolidone, N-methyl-2-pyrrolidon or morpholine; amides, e.g. dimethyl formamide; and sulfur atoms-containing organic solvents, e.g. dimethyl sulfoxide.

The organic solvents generally comprise up to 10 carbon atoms, preferably up to 6 carbon atoms.

Useful mixtures of organic liquids, optionally mixed with water, are for example mixtures of t-butanol/water, acetone/water, glycerin/water, methylene chloride/methanol and methylene chloride/ethanol.

The HPMC ethers described above can also be used for thickening hydrocarbons if the hydrocarbons are mixed with an organic solvent comprising at least one heteroatom. Preferred examples of such mixtures are benzene/ethanol, toluene/ethanol, naphtha/ ethanol and xylene/isopropyl alcohol.

The HPMC ethers described above are particularly useful for thickening polar organic liquids or mixtures thereof with water.

The term "thickened organic liquid or a thickened mixture thereof with water" as used herein means an

4

organic liquid or a mixture of organic liquids, optionally mixed with water, which has been thickened with a HPMC ether described above.

After addition of the HPMC ether, the organic liquid, optionally mixed with water, is generally in the form of a viscous, still pourable liquid or in the form of a highly viscous gel. The viscosity of the viscous liquid, gel or slurry is generally adjustable almost to any desired level by the appropriate selection of type, weight amount and molecular weight of the HPMC ether. For example, addition of a high molecular weight product may increase the viscosity of the organic liquid by over 100,000 mPa.s. As an example, an addition of 4 percent by weight of a HPMC ether having an average molecular weight of about 220,000 to ethanol will result in a viscosity of about 150,000 mPa.s.

Depending on its intended use, the viscosity of the viscous liquid or gel or slurry is generally from 100 mPa.s, preferably from 1,000 mPa.s, most preferably from 5,000 mPa.s; to 180,000 mPa.s, preferably to 150,000 mPa.s. "Thickened" means that the viscosity increase of the organic liquid, optionally mixed with water, by the addition of the HPMC ether is at least 10 mPa.s, preferably at least 500 mPa.s, more preferably at least 4000 mPa.s, most preferably at least 10,000 mPa.s. A "thickening amount" of a HPMC ether is an amount sufficient to provide this viscosity increase. The amount of HPMC ethers which is required to provide the desired viscosity increase depends on a variety of factors, e.g. on the molecular weight (i.e. on its viscosity as a 2 weight percent aqueous solution), on the methoxyl and the hydroxypropoxyl substitution of the HPMC ether and on the type of organic liquid. Generally, from 0.05 percent to 10 percent, preferably from 0.1 percent to 5 percent by weight is added to the organic liquid or mixture thereof with water.

The hydroxypropyl methyl cellulose ethers used for the purpose of the present invention can be produced according to known methods, for example as described in U.S. Patents 2,949,452 and 3,388,082. The levels of substitution of the hydroxypropyl methyl cellulose ethers of the present invention can be achieved by increasing the amounts of propylene oxide and methyl chloride and reaction times until the desired substitution level has been reached.

Examples 1 and 2

In Tables I to IV, the viscosities of different thickened organic liquids, optionally mixed with water, are shown. The HPMC ethers of Examples 1 and 2 are thickening agents used for the purpose of the present invention whereas the HPMC ethers of Comparative Examples A to C are known thickening agents.

In all examples and comparative examples, the concentrations of the hydroxypropyl methyl cellulose ethers were 2 weight percent, based on the weight of the organic liquid. The viscosities were measured on a BROOKFIELD RVT equipment at 20°C, 20 minutes (Tables I and II), and 24 hours (Tables III and IV) after the cellulose ether had been added to the solvent.

In Tables I to IV, the methoxyl and hydroxypropoxyl substitution of the HPMC ethers are listed in column 1. The viscosities of a 2 weight percent solution of the HPMC ethers in water as measured using an UBBELOHDE viscosimeter at 20°C are listed in column 2 of Tables I to IV for characterising the molecular weights of the HPMC ethers.

5

TABLE I

| VISCOSITY (mP.s) after 20 minutes in | | | | | |
|---|---|---|---|---|---|
| (METHOXYL/HYDROXYPROPOXYL SUBSTITUTION) | WATER | ETHANOL 96 wt.% | CHLOROFORM | DIOXANE | N-METHYL-2-PYRROLIDONE |
| | | | | | |
| EXAMPLES | | | | | |
| 1. (29/18) | 72000 | 3000 | >15000 | 13400 | 10000 |
| 2. (29/20) | 25000 | 1200 | >10000 | 5000 | 140 |
| | | | | | |
| COMPARATIVE EXAMPLES | | | | | |
| A. (18/28) | 5000 | 10 | 10 | 20 | 1550 |
| B. (29/10) | 4000 | 10 | 3850 | 20 | 60 |
| C. (22/08) | 4000 | 10 | 10 | 20 | 1200 |

TABLE II

| (METHOXYL/HYDROXYPROPOXYL SUBSTITUTION) | WATER | PROPYLENE GLYCOL | 2-ETHOXYETHANOL | CYCLOHEXANONE | DIPROPYLENE GLYCOL METHYL ETHER |
|---|---|---|---|---|---|
| VISCOSITY (mPa.s) after 20 minutes in | | | | | |
| | | | | | |
| EXAMPLES | | | | | |
| 1. (29/18) | 72000 | 60 | 675 | 10 | 20 |
| 2. (29/30) | 25000 | 60 | 1900 | 20 | 20 |
| | | | | | |
| COMPARATIVE EXAMPLES | | | | | |
| A. (18/28) | 5000 | 60 | 10 | 10 | 10 |
| B. (29/10) | 4000 | 60 | 10 | 10 | 10 |
| C. (22/08) | 4000 | 60 | 10 | 10 | 10 |

EP 0 353 789 A1

TABLE III

| (METHOXYL/HYDROXYPROPOXYL SUBSTITUTION) | WATER | ETHANOL 96 wt.% | CHLOROFORM | DIOXANE | N-METHYL-2-PYRROLIDONE |
|---|---|---|---|---|---|
| VISCOSITY (mPa.s) after 24 hours | | | | | |
| | | | | | |
| EXAMPLES | | | | | |
| 1. (29/18) | 72000 | 10600 | >150000 | 29000 | 11700 |
| 2. (29/20) | 25000 | 6900 | >100000 | 16000 | 160 |
| | | | | | |
| COMPARATIVE EXAMPLES | | | | | |
| A. (18/28) | 5000 | 10 | 10 | 10 | 1800 |
| B. (29/10) | 4000 | 10 | 14000 | 20 | 250 |
| C. (22/08) | 4000 | 10 | 20 | 10 | 1250 |

8

TABLE IV

| (METHOXYL/HYDROXYPROPOXYL SUBSTITUTION) | VISCOSITY (mPa.s) after 24 hours in | | | | |
|---|---|---|---|---|---|
| | WATER | PROPYLENE GLYCOL | 2-ETHOXYETHANOL | CYCLOHEXANONE | DIPROPYLENE GLYCOL METHYL ETHER |
| EXAMPLES | | | | | |
| 1. (29/18) | 72000 | 60 | 7350 | 30 | 20 |
| 2. (29/20) | 25000 | 70 | 8300 | 20 | 20 |
| COMPARATIVE EXAMPLES | | | | | |
| A. (18/28) | 5000 | 70 | 10 | 10 | 10 |
| B. (29/10) | 4000 | 60 | 10 | 20 | 10 |
| C. (22/08) | 4000 | 70 | 10 | 20 | 10 |

EP 0 353 789 A1

Tables I to IV show that in most of the tested organic liquids the HPMC ethers used for the purpose of the present invention gave higher viscosities and were accordingly better thickeners than HPMC ethers which are known for aqueous systems. It is to be understood that the thickening effect of a given weight concentration of a HPMC ether in an organic liquid depends also on the molecular weight of the HPMC ether. The molecular weight of the HPMC ethers is generally expressed as the viscosity of a 2 weight percent solution thereof in water. Furthermore, the viscosity of the organic liquid itself also varies. The viscosity of ethanol (96 weight percent), chloroform, dioxane, 2-ethoxyethanol, cyclohexanone, N-methyl-2-pyrrolidone and dipropylene glycol methyl ether is 10 mPa.s and the viscosity of propylene glycol is 60 mPa.s, measured on a BROOKFIELD RVT equipment at 20°C. For taking the molecular weights of the HPMC ethers and the viscosities of the organic solvent into account for evaluating the thickening effects of the HPMC ethers, the viscosity of the unthickened solvent is deducted from the measured values in Tables III and IV. The resulting values are expressed as percent of the viscosity of the HPMC ethers in water and are listed in Tables V and VI.

TABLE V

| VISCOSITY (mPa.s) after 24 hours (% of aq. viscosity after solvent viscosity has been deducted) | | | | | |
|---|---|---|---|---|---|
| (METHOXYL/HYDROXYPROPOXYL SUBSTITUTION) | WATER | ETHANOL 96 wt.% | CHLOROFORM | DIOXANE | N-METHYL-2-PYRROLIDONE |
| | | | | | |
| EXAMPLES | | | | | |
| 1. (29/18) | 72000 | 15 | >208 | 40 | 16 |
| 2. (29/20) | 25000 | 28 | >400 | 64 | 1 |
| | | | | | |
| COMPARATIVE EXAMPLES | | | | | |
| A. (18/28) | 5000 | 0 | 0 | 0 | 36 |
| B. (29/10) | 4000 | 0 | 350 | 0 | 6 |
| C. (22/08) | 4000 | 0 | 0 | 0 | 31 |

EP 0 353 789 A1

TABLE VI

| VISCOSITY (mPa.s) after 24 hours (% of aq. viscosity after solvent viscosity has been deducted) | | | | | |
|---|---|---|---|---|---|
| (METHOXYL/HYDROXYPROPOXYL SUBSTITUTION) | WATER | PROPYLENE GLYCOL | 2-ETHOXYETHANOL | CYCLOHEXANONE | DIPROPYLENE GLYCOL METHYL ETHER |
| | | | | | |
| EXAMPLES | | | | | |
| 1. (29/18) | 72000 | 0 | 10 | 0 | 0 |
| 2. (29/20) | 25000 | 0 | 33 | 0 | 0 |
| | | | | | |
| COMPARATIVE EXAMPLES | | | | | |
| A. (18/28) | 5000 | 0 | 0 | 0 | 0 |
| B. (29/10) | 4000 | 0 | 0 | 0 | 0 |
| C. (22/08) | 4000 | 0 | 0 | 0 | 0 |

12

Although the thickening effect of the HPMC ethers of Examples 1 and 2 and of Comparative Examples A to C varied depending on the organic liquid, Tables V and VI illustrate that the thickening properties of the HPMC ethers of Examples 1 and 2 are in most solvents considerably better than of Comparative Examples A to C.

In Table VII the viscosities of the different organic liquids are shown which were thickened with the HPMC ether of Example 1 and of Comparative Example B which is a commercially available thickener for aqueous systems.

The ratio of the solvents in the mixtures are weight ratios. The concentrations of the HPMC ethers are listed as percent, based on the weight of the organic liquid. The viscosities are measured on a BROOKFIELD RVT equipment at 20°C, 24 hours after the HPMC ether has been added to the solvent.

TABLE VII

| SOLVENT | CONCENTRATION OF HPMC ETHER (WEIGHT %) | VISCOSITY (mPa.s) EX.1 | VISCOSITY COMP. EX.B |
|---|---|---|---|
| Methylene Chloride (MeCl₂) | 1 | 11100 | 10 |
| MeCl2/EtOH (98/2) | 1 | 8200 | 10 |
| MeCl2/EtOH (94/6) | 1 | 5300 | 250 |
| MeCl2/EtOH (94/6) | 1 | 5100 | 2150 |
| Toluene/EtOH (100/20) | 1.7 | 6800 | 10 |
| Toluene/EtOH (100/30) | 1.5 | 16200 | 10 |

The comparison of Example 1 with the Comparative Example B illustrates that the HPMC ethers used as thickening agents in the present invention can provide considerably higher viscosities in mixtures of organic solvents than known HPMC thickening agents.

The thickened organic liquids can be used for many applications, for example as gelled alcohol fuel or as paint removers and in the manufacturing of gypsum bandages.

Example 3

Viscosities of different organic liquids thickened with an HPMC ether having a methoxyl/hydroxypropoxyl substitution of 25% / 25% and a viscosity of 150,000 as 2 weight percent aqueous solution are shown (in mPa.s) in Table VIII. The viscosity in water was measured using an UBBELOHDE viscosimeter and the viscosity in organic liquid was measured using BROOKFIELD RVT equipment.

13

TABLE VIII

| | | | |
|---|---|---|---|
| EtOH | | 2% | 12,000 |
| MeOH | | 2% | 8,000 |
| MeC1$_2$ | | 1% | 12,400 |
| MeOH/H$_2$O | 80/20 | 1% | 2,200 |
| | 60/40 | 1% | 3,400 |
| | 40/60 | 1% | 4,500 |
| | 20/80 | 1% | 4,800 |
| EtOH/H$_2$O | 80/20 | 1% | 3,000 |
| | 60/40 | 1% | 4,200 |
| | 40/60 | 1% | 5,000 |
| | 20/80 | 1% | 5,300 |
| MeC1$_2$/EtOH | 98/2 | 1% | 9,500 |
| | 96/4 | 1% | 6,100 |
| | 92/8 | 1% | 5,300 |
| | 84/16 | 1% | 5,000 |
| MeC1$_2$/MeOH | 98/2 | 1% | 6,500 |
| | 96/4 | 1% | 4,800 |
| | 92/8 | 1% | 4,300 |
| | 84/16 | 1% | 3,900 |

For illustrating how a HPMC ether useful for the purpose of the present invention can be prepared, reference is made to the following example which should not be construed to limit the invention:

Example 4

Preparation of a HPMC ether

In a suitable sized reaction vessel equipped with agitator, temperature controls and vacuum line, 2 kilograms (kg) of ground cellulose were alkalised with 6.3 kg of 50 weight percent aqueous sodium hydroxide at about 30° C.

The vessel was then evacuated and after evacuation, 4.6 kg methyl chloride and 1.2 kg propylene oxide were added. The temperature in the vessel was subsequently increased from 30° C to 90° C. After about 8 hours the HPMC ether was washed with water of about 90° C and recovered and dried.

The resulting HPMC ether had a methoxyl substitution of 28 percent and a hydroxypropoxyl substitution of 21 percent. The viscosity of a 2 weight percent aqueous solution of the prepared HPMC ether was 75000 mPa.s, measured using an UBBELOHDE viscometer.

Claims

1. A use of a hydroxypropyl methyl cellulose ether for thickening an organic liquid or a mixture thereof with water characterised in that said ether has a methoxyl substitution of from 21 percent to 35 percent, a

14

hydroxypropoxyl substitution of from 18 percent to 35 percent and a sum of the methoxyl and hydroxypropoxyl substitution of from 39 percent to 70 percent and has a viscosity of at least 1000 mPa.s as a 2 weight percent aqueous solution at 20° C.

2. A use as claimed in Claim 1, wherein said ether has a sum of the methoxyl and hydroxypropoxyl substitution of from 40 percent to 65 percent.

3. A use as claimed in Claim 1 or Claim 2, wherein said ether has a methoxyl substitution of from 22 percent to 33 percent and a hydroxypropoxyl substitution of from 20 percent to 30 percent.

4. A hydroxypropyl methyl cellulose ether characterised in that it has a methoxyl substitution of from 25 percent to 35 percent, a hydroxypropoxyl substitution of from 18 percent to 30 percent, a number average molecular weight of at least 50,000, and a viscosity of at least 1000 mPa.s as a 2 weight percent aqueous solution at 20° C.

5. A hydroxypropyl methyl cellulose ether as claimed in Claim 4, wherein the methoxyl substitution is from 25 percent to 33 percent.

6. A hydroxypropyl methyl cellulose ether as claimed in Claim 5, wherein the methoxyl substitution is from 25 to 31 percent.

7. A hydroxypropyl methyl cellulose ether as claimed in any one of Claims 4 to 6, wherein the hyoroxypropoxyl substitution is from 20 percent to 27 percent.

8. A hydroxypropyl methyl cellulose ether as claimed in any one of Claims 4 to 7, wherein the sum of the methoxyl and hydroxypropoxyl substitution is from 44 percent to 58 percent.

9. A hydroxypropyl methyl cellulose ether as claimed in any one of Claims 4 to 8, wherein the ether has a number average molecular weight of from 55 000 to 280,000.

10. A hydroxypropyl methyl cellulose ether as claimed in Claim 9, wherein the number average molecular weight is from 120,000 to 250,000.

11. A process for preparing a hydroxypropyl methyl cellulose ether as claimed in Claim 1 which comprises:

1) reacting cellulose with an aqueous alkali hydroxide, using 1 to 4 parts by weight of the aqueous alkali hydroxide per 1 part by weight of cellulose, the alkali hydroxide having a concentration of from 30 to 55 parts by weight, at a temperature of from 10 to 60° C, followed by

2) reacting the product of step (1) with methyl chloride and propylene oxide, using 0.3 to 0.9 parts by weight of propylene oxide per 1 part by weight of cellulose, using 1 to 3 parts by weight of methyl chloride per 1 part by weight of cellulose at a temperature of from 20 to 100° C.

12. A use as claimed in Claim 2 or Claim 3, wherein the hydroxypropyl methyl cellulose ether is as claimed in any one of Claims 4 to 10.

13. A use as claimed in any one of Claims 1, 2, 3 and 12, wherein said ether has a methoxyl and a hydroxypropoxyl substitution of at least 25 percent each.

14. A use as claimed in any one of Claims 1, 2, 3, 12 and 13, wherein said ether has a viscosity of 1000 mPa.s to 200,000 mPa.s as a 2 weight percent aqueous solution.

15 A use as claimed in Claim 14, wherein said ether has a viscosity of 15,000 mPa.s to 100,000 mPa.s as a 2 weight percent aqueous solution.

16. A thickened organic liquid or a thickened mixture thereof with water characterised in that it contains a thickening amount of a hydroxpropyl methyl cellulose ether as defined in any one of the preceding claims.


Claims for the Following Contracting State: AT

1. A use of a hydroxypropyl methyl cellulose ether for thickening an organic liquid or a mixture thereof with water, characterised in that said ether has a methoxyl substitution of from 21 percent to 35 percent, a hydroxypropoxyl substitution of from 18 percent to 35 percent and a sum of the methoxyl and hydroxypropoxyl substitution of from 39 percent to 70 percent and has a viscosity of at least 1000 mPa.s as a 2 weight percent aqueous solution at 20° C.

2. A use as claimed in Claim 1, wherein said ether has a sum of the methoxyl and hydroxypropoxyl substitution of from 40 percent to 65 percent.

3. A use as claimed in Claim 1 or Claim 2, wherein said ether has a methoxyl substitution of from 22 percent to 33 percent and a hydroxypropoxyl substitution of from 20 percent to 30 percent.

4. A process for preparing a hydroxypropyl methyl cellulose ether having a methoxyl substitution of from 25 percent to 35 percent and a hydroxypropoxyl substitution of from 18 percent to 30 percent, a number average molecular weight of at least 50,000, and a viscosity of at least 100 mPa.s as a 2 percent aqueous solution, which comprises:

1) reacting cellulose with an aqueous alkali hydroxide, using 1 to 4 parts by weight of the aqueous alkali hydroxide per 1 part by weight of cellulose, the alkali hydroxide having a concentration of from 30 to 55 parts by weight, at a temperature of from 10 to 60°C, followed by

2) reacting the product of step (1) with methyl chloride and propylene oxide, using 0.3 to 0.9 parts by weight of propylene oxide per 1 part by weight of cellulose, using 1 to 3 parts by weight of methyl chloride per 1 part by weight of cellulose, at a temperature of from 20 to 100°C.

5. A process as claimed in Claim 4, wherein the ether has a methoxyl substitution of from 25 percent to 33 percent.

6. A process as claimed in Claim 5, wherein the ether has a methoxyl substitution of from 25 percent to 31 percent.

7. A process as claimed in any one of Claims 4 to 6, wherein the ether has a hydroxypropoxyl substitution of from 20 percent to 27 percent.

8. A process as claimed in any one of Claims 4 to 7, wherein the sum of the methoxyl and hydroxypropoxyl substitution is from 44 percent to 58 percent.

9. A process as claimed in any one of Claims 4 to 8, wherein the ether has a number average molecular weight of from 55,000 to 280,000.

10. A process as claimed in Claim 9, wherein the number average molecular weight is from 120,000 to 250,000.

11. A use as claimed in Claim 2 or Claim 3, wherein the hydroxypropyl methyl cellulose ether is as defined in any one of Claims 4 to 10.

12. A use as claimed in any one of Claims 1, 2, 3 and 11 wherein said ether has a methoxyl and a hydroxypropoxyl substitution of at least 25 percent each.

13. A use as claimed in any one of Claims 1, 2, 3, 11 and 12, wherein said ether has a viscosity of 1000 mPa.s to 200,000 mPa.s as a 2 weight percent aqueous solution.

14. A use as claimed in Claim 13, wherein said ether has a viscosity of 15,000 mPa.s to 100,000 mPa.s as a 2 weight percent aqueous solution.

16

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 096 325 (J. TENG et al.) <br> * Whole document * <br> --- | 1-14 | C 08 B 11/193 <br> B 01 J 19/06 // <br> C 09 D 9/00 <br> C 10 L 7/04 |
| D,X | US-A-4 389 393 (SCHOR et al.) <br> * Column 3, lines 1-25 * <br> --- | 4-10 | |
| A | ABSTRACT BULLETIN OF THE INSTITUTE OF PAPER CHEMISTRY, vol. 55, no. 9, March 1985, page 1067, abstract no. 10068(U), Appleton, Wisconsin, US; & JP-A-84 49 201 (SHIN-ETSU CHEMICAL CO., LTD) 21-03-1984; & CHEMICAL ABSTRACT, vol. 101, 1984, page 88, abstract no. 40113z <br> --- | | |
| A | PATENT ABSTRACTS OF JAPAN, vol. 6, no. 7 (C-87)[885], 16th January 1982; & JP-A-56 129 640 (MATSUSHITA DENKO K.K.) 09-10-1981 <br> --- | | |
| D,A | FR-A-2 215 427 (DOW CHEMICAL) <br> * Page 1, lines 36-40 * <br> ----- | | TECHNICAL FIELDS SEARCHED (Int. Cl.5) <br><br> C 08 B |

The present search report has been drawn up for all claims

| Place of search | Date of completion of the search | Examiner |
|---|---|---|
| THE HAGUE | 27-11-1989 | LENSEN H.W.M. |